# EUROPÄISCHE PATENTSCHRIFT

(11) **EP 2 335 465 B1**
(45) Veröffentlichungstag und Bekanntmachung des Hinweises auf die Patenterteilung: **23.05.2012**
(21) Anmeldenummer: 10401211.7
(22) Anmeldetag: 03.12.2010
(51) Int. Cl.: A01B 63/28, A01B 63/00, A01C 5/06

(54) **Landmaschine**
Agricultural machine
Machine agricole

(30) Priorität: 15.12.2009 DE 102009044898
(43) Veröffentlichungstag der Anmeldung: 22.06.2011
(73) Patentinhaber: Amazonen-Werke H. Dreyer GmbH & Co. KG, 49205 Hasbergen (DE)
(72) Erfinder: Pokriefke, Michael, 27798, Hude (DE)

(56) Entgegenhaltungen:
- EP-A2- 0 171 719
- DE-A1-102006 034 798
- US-A1- 2009 020 053

## Beschreibung

Die Erfindung betrifft eine Landmaschine gemäß des Oberbegriffes des Patentanspruches 1.

Eine derartige Landmaschine ist beispielsweise durch die DE 10 2006 034 798 A1 bekannt. Diese Landmaschine ist als Sämaschine ausgebildet. Hierbei kann der Maschinenrahmen um eine quer zur Fahrtrichtung verlaufende Schwenkachse mittels einer motorischen Stelleinrichtung verstellt werden, um eine Anpassung der Säschare an die Bodenkontur zu erreichen, damit möglichst eine gleichmäßige Arbeitstiefe bzw. Ablagetiefe des auszubringenden Saatgutes sichergestellt ist. Die Anordnung und Ausgestaltung des Maschinenrahmens zur Anpassung der als Säschare ausgebildeten Bodenbearbeitungselemente ist relativ aufwendig.

Der Erfindung liegt die Aufgabe zugrunde, in einfacher Weise eine gleichmäßige Bearbeitungstiefe von Bodenbearbeitungswerkzeugen und/oder Ablagetiefe des abzulegenden Saatgutes durch Bodenbearbeitungselemente und/oder Säschare erreichen zu können.

Diese Aufgabe wird erfindungsgemäß durch die kennzeichnenden Merkmale des Patentanspruches 1 gelöst. Infolge dieser Maßnahmen wird in einfacher Weise die Lage der Bodenbearbeitungselemente zum Maschinenrahmen abgefragt und der Maschinenrahmen soweit nachgestellt, dass die Bodenbearbeitungselemente in der ersten Querreihe sich in der gleichen Lage zu dem Maschinenrahmen wie die Bodenbearbeitungselemente der hinteren Querreihe befinden. Somit ist also in überraschend einfacher Weise nur durch die Verstellung des Maschinenrahmens, an dem die Bodenbearbeitungselemente angeordnet sind, bei unebenen und sich ändernden Bodenoberflächen eine gleichmäßige Bearbeitungstiefe zu erreichen.

Somit wird in einfacher Weise eine bodenparallele Ausrichtung des Tragrahmens durch die Abtastung der Bodenparallelität mittels der Ermittlung der Winkellage bzw. Lage der Bodenbearbeitungselemente ermöglicht. Somit lässt sich in einfacher Weise die Arbeitstiefe beim Überqueren von Senken und Bergkuppen in überraschend einfacher Weise erreichen. Es findet also ein einfacher Abgleich der Winkelstellung zwischen dem Bodenbearbeitungselement der vorderen und hinteren Querreihe statt.

Um die Landmaschine in einfacher Weise als Sämaschine einsetzen zu können, ist vorgesehen, dass die als Arbeitseinheit ausgebildete Säeinheit zumindest ein Säschar mit Tiefenführungs- und/oder Druckrolle umfasst.

Weitere Einzelheiten der Erfindung sind der Beispielsbeschreibung und den Zeichnungen zu entnehmen. Hierbei zeigen
- Fig. 1: die Landmaschine in Seitenansicht und Prinzipdarstellung beim Überqueren einer Bergkuppe ohne Nachstellung des Maschinenrahmens gegenüber dem Tragrahmen,
- Fig. 2: den an dem Tragrahmen angeordneten Maschinenrahmen mit Säscharen und Tiefenführungsrollen gemäß Fig. 1 in vergrößertem Maßstab,
- Fig. 3: die Landmaschine in Seitenansicht und Prinzipdarstellung beim Überqueren einer Bergkuppe mit Nachstellung des Maschinenrahmens gegenüber dem Tragrahmen,
- Fig. 4: den an dem Tragrahmen angeordneten Maschinenrahmen mit Säscharen und Tiefenführungsrollen gemäß Fig. 3 in vergrößertem Maßstab,
- Fig. 5: die Landmaschine in Seitenansicht und Prinzipdarstellung beim Überqueren einer Senke mit Nachstellung des Maschinenrahmens gegenüber dem Tragrahmen und
- Fig. 6: den an dem Tragrahmen angeordneten Maschinenrahmen mit Säscharen und Tiefenführungsrollen gemäß Fig. 5 in vergrößertem Maßstab.

Die Landmaschine ist als aufgesattelte Sämaschine ausgebildet. Die Sämaschine weist einen Maschinenrahmen 1 auf, der über ein Fahrwerk 2 auf dem Boden abgestützt ist. Der Maschinenrahmen 1 weist auf seiner Vorderseite eine Zugvorrichtung 3 auf, die mit den Anhängevorrichtungen 4 des die Landmaschine ziehenden Schleppers 5 gekuppelt ist.

Auf der Rückseite des Maschinenrahmens 1 ist ein Tragrahmen 6 angeordnet. An diesem Tragrahmen 6 ist eine Arbeitseinheit 7 angeordnet. Die Arbeitseinheit 7 umfasst als Säschare 8 ausgebildete Bodenbearbeitungselemente mit zugeordneten Tiefenführung- und/oder Druckrollen 9. Die als Säschare 8 ausgebildeten Bodenbearbeitungselemente sind im Ausführungsbeispiel in drei Querreihen mit Abstand zueinander hintereinander angeordnet. Die Bodenbearbeitungselemente 8 mit den zugeordneten Tiefenführungsrollen 9 sind jeweils mittels eines Haltearmes 10 mit einer Gelenkverbindung 11 in Höhenrichtung bewegbar an den beabstandet zueinander angeordneten Querbalken 12 des Tragrahmens 6 angeordnet. Die Bodenbearbeitungselemente 8 werden durch zwischen den Haltearmen 10 der Bodenbearbeitungselemente 8 und den Querbalken 12 angeordneten, nicht dargestellten Federelementen gegen den Boden 13 gedrückt. Diese Federelemente können beispielsweise als bekannte Gummilagerungen ausgebildet sein. Hierbei wird die Federkraft durch Verdrehen der verdrehbar am Tragrahmen 6 angeordneten Querbalken 12 mittels der als Hydraulikzylinder 14 ausgebildeten Stellmittel durch die Gummielemente aufgebracht.

Der Tragrahmen 6 ist mittels einer Gelenkanordnung 15 an den Maschinenrahmen 1 angebracht. Diese Gelenkanordnung 15 weist eine quer zur Fahrtrichtung 16 verlaufende Schwenkachse 17 auf. Weiterhin ist zwischen dem Tragrahmen 6 und dem Maschinenrahmen 1 zumindest eine als Hydraulikzylinder 18 ausgebildete motorische Stelleinrichtung angeordnet. Mittels dieses Hydraulikzylinders 18 ist der Tragrahmen 6 mit den daran angeordneten Bodenbearbeitungselementen 8 und zugeordneten Rollen 9 um die quer zur Fahrtrichtung 16 verlaufende Schwenkachse 18 zu verschwenken.

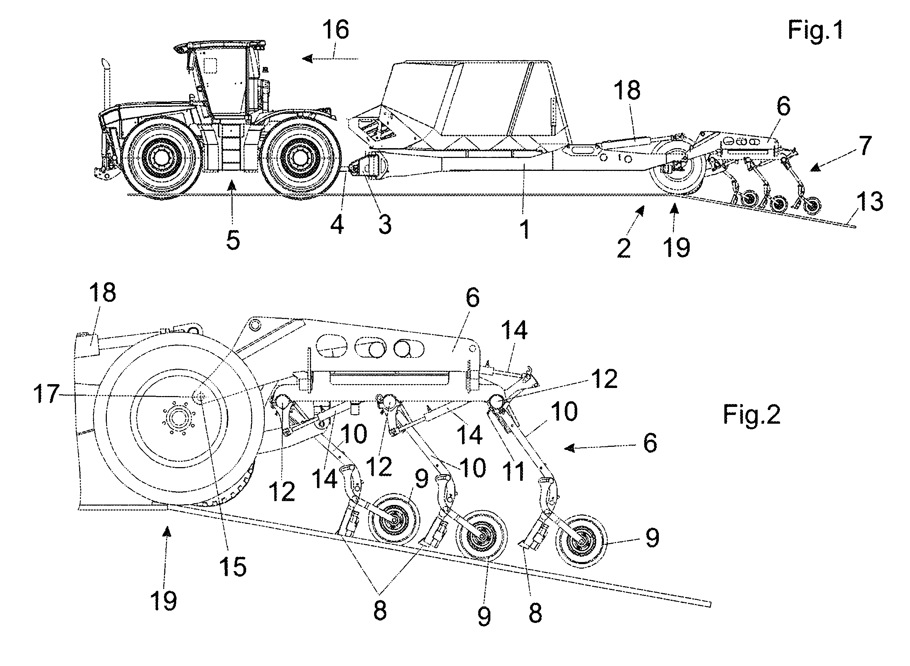

Wie die Fig. 1 und 2 zeigen wird beim Überfahren einer Bodenkuppe 19 nicht mehr sichergestellt, dass alle Säschare 8 in den Boden 13 eindringen bzw. gleichmäßig tief in den Boden 13 eindringen, um den Boden 13 zu bearbeiten bzw. das auszubringende Saatgut abzulegen, wie den Fig. 1 und 2 zeigen. In der darstellten Situation befindet sich der Maschinenrahmen 1 bzw. die durch die Tragbalken 12 gezogene Linie nicht mehr parallel zu der zu bearbeitenden Bodenoberfläche 13. Aufgrund der Federanordnung werden die Säschare 8 zwar nach unten gedrückt, aber da der Tragrahmen 6 sich nicht parallel zur Bodenoberfläche befindet, kann er sich auch nicht der Form der Bodenoberfläche 13 anpassen.

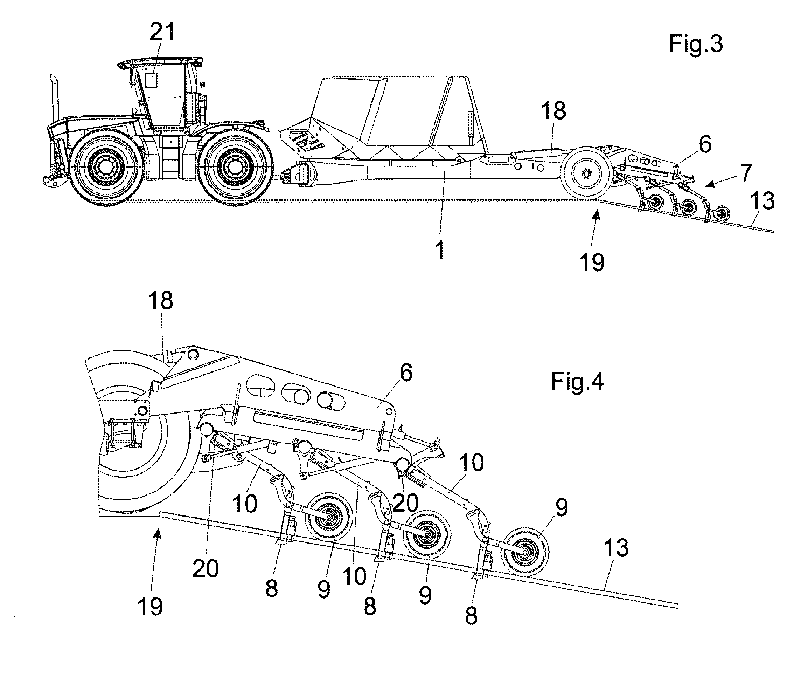

Um hier Abhilfe zu schaffen muss der Tragrahmen 6 mittels des Hydraulikzylinders 18 um die durch die Gelenkanordnung 15 verlaufende Schwenkachse 17 verschwenkt werden, wie die Fig. 3 und 4 zeigen. Nach der Verschwenkung befindet sich der Tragrahmen 6 parallel zur zu bearbeitenden Bodenoberfläche 13, so dass alle Säschare 8 gleich tief in den Boden 13 eindringen und die Rollen 9 mittels der Federkraft gegen den Boden 13 gedrückt werden.

Um dieses automatisch zu erreichen, ist jeweils einem Bodenbearbeitungselement 8 der vorderen Querreihe und der hinteren Querreihe ein Sensorelement 20 zur Erfassung der Auslenkung des Haltearmes 10 des Bodenbearbeitungselementes 8 gegenüber dem Tragrahmen 6 zugeordnet. Dieser Sensor 20 sendet Signale und Daten an einem auf dem Schlepper 5 angeordneten Bordcomputer 21. In dem Speicher des Bordcomputers 21 ist ein Auswerteprogramm hinterlegt, mittels welchem die Steuerelemente der motorischen Stelleinrichtung 18 vom Bordcomputer 21 derart angesteuert werden, das durch Verschwenken des Tragrahmens 6 durch die Stelleinrichtung 18 die Auslenkung der Bodenbearbeitungselemente 8 der ersten Querreihe zumindest annähernd gleich der Auslenkung der Bodenbearbeitungselemente 8 der hinteren Querreihe gegenüber dem Tragrahmen 6 ist, wie die Fig. 3 und 4 zeigen. Mittels dieses Auswerteprogramms des Bordcomputers 21 und der Erfassung der Lage der Haltearme 10 der Bodenbearbeitungselemente 8 gegenüber dem Tragrahmen 6 ist während des gesamten Bearbeitungsvorganges die Lage des Tragrahmens 6 zu den Bodenbearbeitungselementen 8 und somit zur Kontur der Bodenoberfläche 13 einstellbar und die Auslenkung der Bodenbearbeitungselemente 8 der hinteren Querreihe gegenüber dem Tragrahmen 6 und die Auslenkung der Bodenbearbeitungselemente 8 gegenüber der ersten Querreihe zumindest annähernd gleich einzustellen und zu halten. Somit wird also eine gleichmäßige Eindingtiefe der Bodenbearbeitungselemente 8 bzw. der Säschare in den Boden 13 erreicht. Durch einen einfachen Abgleich der Winkelwerte zwischen den Bodenbearbeitungselementen 8 der ersten Querreihe und den Bodenbearbeitungselementen 8 der hinteren Querreihe gegenüber dem Tragrahmen 6 kann über die Einstellung des Tragrahmens 6 eine Anpassung an das Bodenniveau bzw. -verlauf in einfacher Weise erzielt werden.

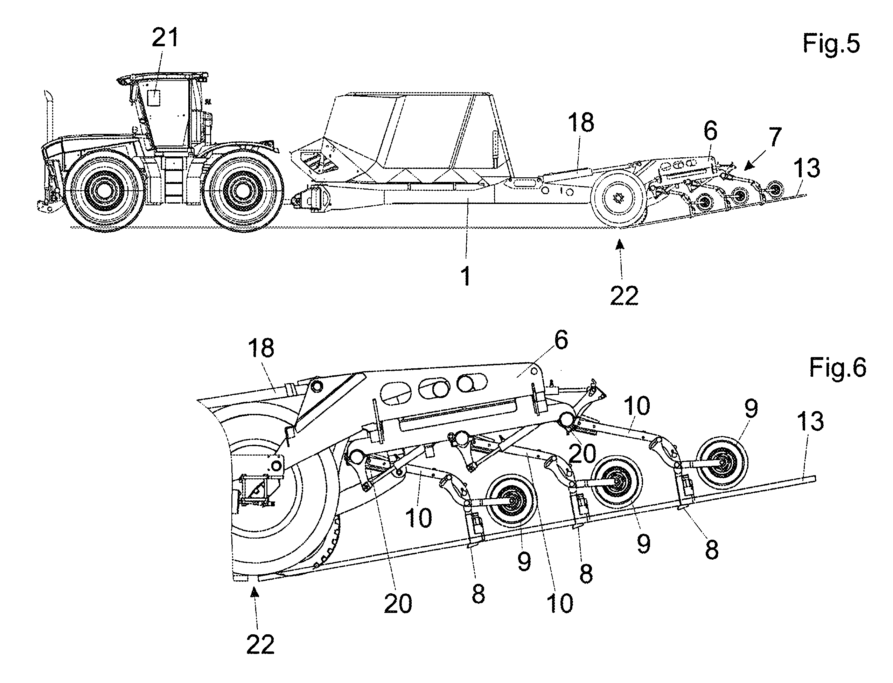

In den Fig. 4 und 5 ist die Situation dargestellt, wenn die Landmaschine eine Senke 22 durchfährt. Auch hier erfolgt ein Verschwenken des Tragrahmens 6 über den Hydraulikzylinder 18 aufgrund der an den Bordcomputer 21 ausgewerteten Signale, so dass hier der Tragrahmen 6 entgegensetzt zu der Einstellung gemäß Fig. 3 und 4 verschwenkt wird.

## Patentansprüche

1. Landmaschine, insbesondere aufgesattelte Sämaschine, mit einem Maschinenrahmen, der über ein Fahrwerk auf dem Boden abgestützt ist, sowie zumindest einer an einem Tragrahmen angeordneten Arbeitseinheit, umfassend Bodenbearbeitungselemente mit zugeordneten Tiefenführungs- und/oder Druckrollen, wobei die Bodenbearbeitungselemente mit den zugeordneten Tiefenführungs- und/oder Druckrollen in Höhenrichtung bewegbar angeordnet und mittels Federelementen gegen den Boden gedrückt werden, wobei der Tragrahmen mittels einer Gelenkanordnung an dem Maschinenrahmen um eine quer zur Fahrtrichtung verlaufende Schwenkachse mittels einer motorischen Stelleinrichtung verschwenkbar angeordnet ist, wobei die Bodenbearbeitungselemente in zumindest zwei Querreihen beabstandet hintereinander angeordnet sind, **dadurch gekennzeichnet, dass** jeweils zumindest einem Bodenbearbeitungselement (8) der vorderen Querreihe und hinteren Querreihe jeweils ein Sensorelement (20) zur Erfassung der Auslenkung des Bodenbearbeitungselementes (8) gegenüber dem Tragrahmen (6) zugeordnet ist, dass die Landmaschine mit einem Bordcomputer (21) verbunden ist, dass die Sensorelemente (20) Signale an den Bordcomputer (21) übermitteln, dass die motorische Stelleinrichtung (18) vom Bordcomputer (21) aufgrund eines im Speicher des Bordcomputers (21) hinterlegten Auswerteprogramms derart ansteuerbar ist, dass durch Verschwenken des Tragrahmens (6) durch die Stelleinrichtung (18) die Auslenkung der Bodenbearbeitungselemente (8) der ersten Querreihe zumindest annähernd gleich der Auslenkung der Bodenbearbeitungselemente (8) der hinteren Querreihe gegenüber dem Tragrahmen (6) während des gesamten Bearbeitungsvorganges einstellbar und/oder zu halten ist.

2. Landmaschine nach Anspruch 1, **dadurch gekennzeichnet, dass** die Arbeitseinheit (7) eine Säeinheit mit zumindest einem Säschar (8) mit Tiefenführungs- und/oder Druckrolle (9) umfasst.

## Claims

1. Agricultural machine, in particular a semi-mounted seed drill, having a machine frame supported on the ground by a running gear and at least one work unit disposed on a supporting frame, comprising soil cultivating elements having associated depth control rollers and/or pressure rollers, wherein the soil cultivating elements having the associated depth control rollers and/or pressure rollers are arranged so as to be movable in the vertical direction and are pressed against the ground by means of spring elements, wherein the supporting frame is arranged on the machine frame by means of an articulated coupling such that it can be pivoted by means of a motor-driven actuating device about a pivot axle running transversely to the direction of travel, wherein the soil cultivating elements are arranged one behind the other, at a distance apart, in at least two cross-rows, **characterized in that** a sensor element (20) for registering the deflection of the soil cultivating element (8) in relation to the supporting frame (6) is respectively assigned to at least one soil cultivating element (8) of the front cross-row and of the rear cross-row, **in that** the agricultural machine is connected to an on-board computer (21), **in that** the sensor elements (20) transmit signals to the on-board computer (21), **in that** the motor-driven actuating device (18) can be controlled by the on-board computer (21), on the basis of an evaluation program stored in the memory of the on-board computer (21), in such a way that, through pivoting of the supporting frame (6) by the actuating device (18), the deflection of the soil cultivating elements (8) of the first cross-row can be set and/or kept at least approximately equal to the deflection of the soil cultivating elements (8) of the rear cross-row in relation to the supporting frame (6) throughout the cultivating operation.

2. Agricultural machine according to Claim 1, **characterized in that** the work unit (7) comprises a sowing unit having at least one seed coulter (8) with depth control roller and/or pressure roller (9).

## Revendications

1. Machine agricole, notamment semoir attelé comportant un cadre de machine s'appuyant sur le sol par un châssis ainsi qu'au moins une unité de travail installée sur un châssis de support comprenant :
- des éléments de travail du sol auxquels sont associées des roues de jauge et/ou des roues de compactage,
* les éléments de travail étant mobiles en hauteur par les roues de jauge et/ou de compactage associées et poussés contre le sol par des éléments de ressort,
* le châssis de support étant monté pivotant par un dispositif d'articulation sur le cadre de la machine autour d'un axe de pivotement dirigé transversalement à la direction de déplacement par l'intermédiaire d'une installation d'actionnement à moteur,
* les éléments de travail du sol étant installés les uns derrière les autres dans au moins deux rangées transversales écartées l'une de l'autre,
machine agricole **caractérisée en ce que**
- chaque fois au moins l'un des éléments de travail du sol (8) de la rangée transversale avant et de la rangée transversale arrière est associé à un capteur (20) pour détecter le débattement des éléments de travail (8) par rapport au châssis de support (6),
- la machine agricole est reliée à un ordinateur de bord (21),
- les capteurs (20) transmettent des signaux à l'ordinateur de bord (21),
- l'installation d'actionnement à moteur (18) est commandée par l'ordinateur de bord (21) en fonction d'un programme d'exploitation installé dans la mémoire de l'ordinateur de bord (21) de façon que le pivotement du châssis de support (6) par l'installation d'actionnement (18), règle le débattement des éléments de travail (8) de la première rangée transversale et/ou le tient au moins sensiblement de façon identique au débattement des éléments de travail du sol (8) de la dernière rangée transversale par rapport au châssis de support (6) pendant toute la phase de travail.

2. Machine agricole selon la revendication 1,
**caractérisée en ce que**
l'unité de travail (7) comporte une unité de semoir avec au moins un socle de semoir (8) et des roues de jauge et/ou de compactage (9).
